# EUROPÄISCHE PATENTSCHRIFT

(11) **EP 0 772 920 B1**
(45) Veröffentlichungstag und Bekanntmachung des Hinweises auf die Patenterteilung: **29.09.1999**
(21) Anmeldenummer: 95925705.6
(22) Anmeldetag: 19.07.1995
(51) Int. Cl.: H04B 7/005

(54) **MOBILE FUNKSENDE-/FUNKEMPFANGSEINRICHUTNG MIT REGELKREIS ZUR REGELUNG DER SENDELEISTUNG**
MOBILE RADIO TRANSMITTING/RECEIVING DEVICE WITH TRANSMITTING POWER REGULATION CIRCUIT
DISPOSITIF MOBILE D'EMISSION ET DE RECEPTION RADIOPHONIQUE A CIRCUIT DE REGULATION DE LA PUISSANCE D'EMISSION

(30) Priorität: 25.07.1994 DE 4426255
(43) Veröffentlichungstag der Anmeldung: 14.05.1997
(73) Patentinhaber: SIEMENS AKTIENGESELLSCHAFT, 80333 München (DE)
(72) Erfinder: BIEDERMANN, Rolf, D-46499 Hamminkeln (DE)
(86) Internationale Anmeldenummer: DE9500949
(87) Internationale Veröffentlichungsnummer: WO9603812

(56) Entgegenhaltungen:
- EP-A- 0 330 166
- EP-A- 0 428 099
- EP-A- 0 610 030

## Beschreibung

Die Erfindung betrifft eine mobile Funksende-/Funkempfangseinrichtung, insbesondere Mobilteil eines Schnurlostelefons.

Mobile Funksende-/Empfangseinrichtungen werden bei der drahtlosen Telekommunikation in einem drahtlosen Telekommunikationssystem als Endgeräte eingesetzt. Heute auf dem Markt verfügbare drahtlose Telekommunikationssysteme sind beispielsweise Schnurlos-, Mobilfunk-, Satellitenfunk-, Bündelfunktelefone etc. Den mobilen Funksende-/Funkempfangseinrichtungen der drahtlosen Telekommunikationssysteme gemeinsam sind dabei einrichtungsspezifische und -individuelle Spannungsversorgungseinheiten, aus denen die Einrichtungen die für den Telekommunikationsbetrieb notwendige elektrische Energie beziehen. Verwendete Spannungsversorgungseinheiten sind z. B. Batterien, aufladbare Akkumulatoren etc. Der Leistungs- bzw. Energieverbrauch der einzelnen drahtlosen Telekommunikationssysteme wird im wesentlichen durch die Art der drahtlosen Telekommunikation bestimmt, die durch unterschiedliche Reichweiten bei der Übertragung von Funknachrichten spezifiziert ist. Wegen der geringeren Übertragungsreichweite ist der Leistungs- bzw. Energieverbrauch bei Schnurlostelefonen nach dem DECT-Standard mit einer Übertragungsreichweite von ca. 250 m (Digital European Cordless Telecommunication; **vgl. (1)** Nachrichtentechnik Elektronik 42 (Jan./Feb. 1992), No.1, Berlin; U. Pilger: "Struktur des DECT-Standards"; Seiten 23 bis 29; **(2)** Philips Telecommunication Review: "DECT, Universal Cordless Access System"; Vol. 49, Nr. 3, 09/1991, Seiten 68 bis 73) wesentlich geringer als bei zellularen Mobilfunktelefonen nach dem GSM-Standard mit Übertragungsreichweiten von ca. 2 bis 15 km (Groupe Spéciale Mobile oder Global Systems for Mobil Communication; **vgl.** Informatik Spektrum , Springer Verlag Berlin, Jg. 14, 1991, No.3, Seiten 137 bis 152, "Der GSM-Standard - Grundlage für digitale europäische Mobilfunknetze"). So beträgt beispielsweise die Sendeleistung bei DECT-spezifischen Schnurlostelefonen in etwa 250 mW (**vgl.** European Telecommunication Standard - Final Draft - ; prETS 300 175-2, 5/1992, Part 2, Kapitel 5 und Annex A.2, ETS-Institute 06921 Sofia Antipoles, France), während bei Mobilfunktelefonen in etwa 2000 mW benötigt werden.

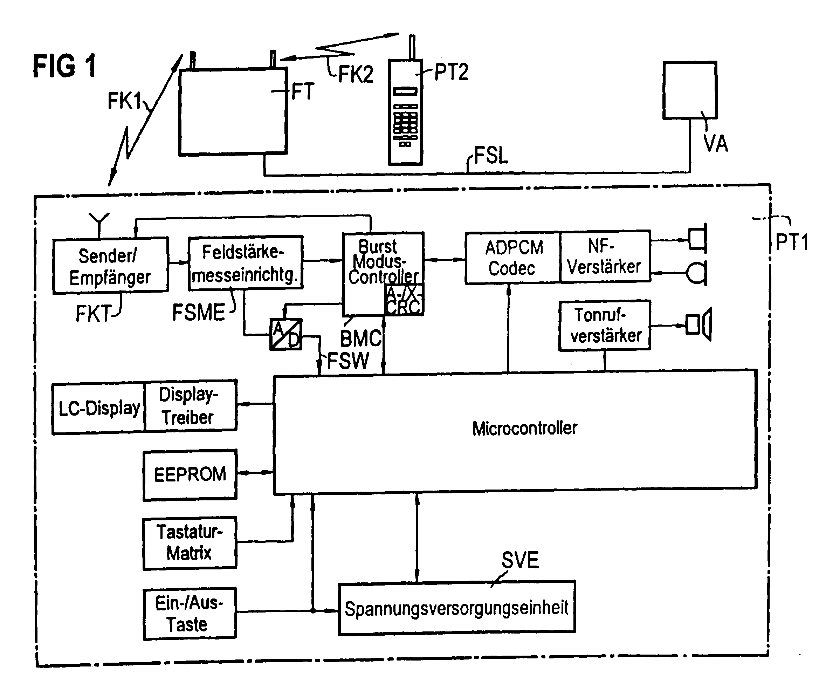

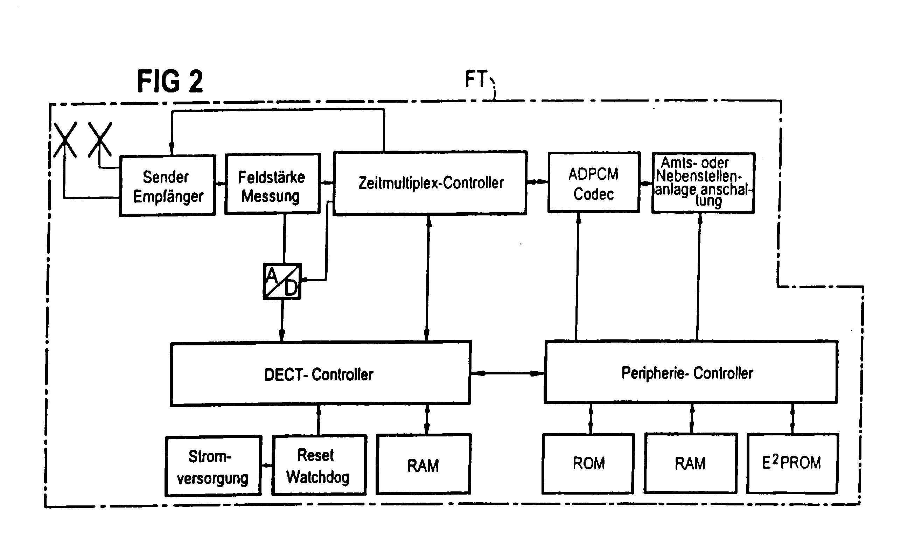

Figur 1 zeigt den prinzipiellen Aufbau eines DECT-spezifischen Schnurlos-Mobilteils PT1 (Portable Termination). Schnurlos-Mobilteile mit einem solchen Aufbau sind unter der Produktbezeichnung "Gigaset 952" (**vgl.** DE-Z: Funkschau 12/1993, Seiten 24 und 25; "Digitale Freiheit - Gigaset 952: Das erste DECT-Telefon"; Autor: G. Weckwert - 1993) auf dem Markt eingeführt worden. Der Aufbau des Schnurlos-Mobilteils ist ferner auch aus **(1)** der DE-Z: Funkschau 10/1993; Seiten 74 bis 77; Titel: "Digital kommunizieren mit DECT - DECT-Chipsatz von Philips"; Autor: Dr. J. Nieder und **(2)** der WO 94/10812 (Figur 1 mit der dazugehörigen Beschreibung) bekannt.

Das Schnurlos-Mobilteil PT1 ist über einen ersten Funkkanal FK1 einer Schnurlos-Basisstation FT (Fixed Termination) zugeordnet. Die Schnurlos-Basisstation FT kann z. B. weiterhin intern über einen zweiten Funkkanal FK2 mit einem weiteren Schnurlos-Mobilteil PT2 verbunden und extern über eine Fernsprechleitung FSL an eine öffentliche oder private Vermittlungsanlage VA angeschlossen sein. Während das Schnurlos-Mobilteil PT2 mit dem Schnurlos-Mobilteil PT1 baugleich ist, ist die Schnurlos-Basisstation FT, ausgehend von der WO 94/10812 (Figur 1 mit der dazugehörigen Beschreibung), gemäß der Darstellung in der Figur 2 aufgebaut.

Bei DECT-spezifischen Schnurlostelefonen können der Basisstation FT bis zu 12 Mobilteile PT zugeordnet werden. Die elektrische Energie für die schnurlose Telekommunikation mit der Schnurlos-Basisstation FT bezieht das Schnurlos-Mobilteil PT1 aus einer dem Mobil teil PT1 zugeordneten Spannungsversorgungseinheit SVE. Diese Spannungsversorgungseinheit SVE besteht im wesentlichen aus einem Akkumulator, der an einer Ladestation im Ruhezustand des Schnurlos-Mobilteils PT1 aufgeladen wird und der ferner bedarfsweise ausgetauscht werden kann. Die Spannungsversorgungseinheit SVE dient dabei insbesondere als Energiequelle für die Sendeleistung, mit der das Schnurlos-Mobilteil PT1 Funknachrichten an die Schnurlos-Basisstation FT sendet. Diese Funknachrichten werden anschließend von der Basisstation FT aufgrund der Internverbindung an das Mobilteil PT2 oder aufgrund der Externverbindung als Leitungsnachricht an die Vermittlungsanlage VA weitergegeben. Die Funknachricht wird dabei generell mit einer Sendeleistung von etwa 250 mW gesendet.

Damit die zu sendenden mobilteilindividuellen Funknachrichten auch mit dieser Sendeleistung gesendet werden, weist das Schnurlos-Mobilteil PT1 einen Mikrocontroller MIC und einen Burst Modus-Controller BMC auf, die miteinander verbunden sind. Während der Mikrocontroller MIC mit der Spannungsversorgungseinheit SVE verbunden ist, weist der Burst Modus-Controller BMC in Senderichtung eine Verbindung zu einem Funkteil FKT des Mobilteils PT1 auf. In Empfangsrichtung ist das Schnurlos-Mobilteil PT1 aufgrund einer zwischen dem Funkteil FKT und dem Burst Modus-Controller BMC angeordneten Feldstärkemeßeinrichtung FSME in der Lage, in der Empfangsnachricht inhärent enthaltene Feldstärkewerte FSW zu erfassen und auszuwerten.

Desweiteren können in dem Burst Modus-Controller BMC Übertragungsfehler, sogenannte CRC-Werte (Cycle Redundancy Check; A-CRC, X-CRC; **vgl.** hierzu European Telecommunication Standard - Final Draft - ; prETS 300 175-3, 5/1992, Part 3, Kapitel 6.2.5 und 10.8.1, ETS-Institute 06921 Sofia Antipoles, France), erkannt und ausgewertet werden. Die Auswertung der Feldstärkewerte FSW und der Übertragungsfehlerwerte A-CRC, X-CRC findet in dem Mikrocontroller MIC statt. So werden diese Werte beispielsweise gemäß der WO 94/10764 als "Antenna Diversity"-Kriterium oder gemäß der WO 94/10769 als Kriterium für das Stummschalten der Funksende-/Funkempfangseinrichtung (Mute-Funktion) verwendet.

Um die maximale Betriebszeitdauer des Schnurlos-Mobilteils PT1 bei unveränderter Spannungsversorgungseinheit SVE, d. h. unveränderte Größe und Energiekapazität des Akkumulators, zu erhöhen, werden gemäß der EP-0 330 166 B1 Leistungsüberschüsse bei Funksystemen durch eine Sendeleistungsregelung in Abhängigkeit von der Übertragungsqualität sowie der Empfangsfeldstärke vermieden. Dies geschieht dadurch, daß als Regelkriterien für die Regelung der Sendeleistung eines mobilen Handapparates eines Mobilfunksystems eine Kombination aus einer Empfangspegelbewertung und einer Qualitätsbewertung in einer Basisstation des Mobilfunksystems über den aus dem in der Basisstation ankommenden Signal ermittelten Phasenjitter derart benutzt werden, daß unterhalb eines bestimmten, als Sollwert vorgegebenen Empfangspegels die Sendeleistungsregelung nach dem Regelkriterium der Qualität des Empfangssignals erfolgt und oberhalb eines bestimmten Empfangspegels die Sendeleistungsregelung auf das Regelkriterium des Empfangspegels umgeschaltet wird und der Sender des mobilen Handapparates bei Überschreitung bzw. Unterschreitung eines vorbestimmten Sollwertes des Phasenjitters bzw. des Empfangspegels zur Erniedrigung bzw. Erhöhung der Sendeleistung veranlaßt wird. Nachteilig bei dieser Art der Sendeleistungsregelung ist es, daß die Sendeleistung des mobilen Handapparates nur mit Unterstützung der Basisstation des Mobilfunksystems geregelt werden kann.

Aus der nachveröffentlichten EP-0 610 030 A2 ist ein Verfahren und eine Vorrichtung zum Regeln der Sendeleistung in zellularen Funksystemen bekannt, bei dem die Vorteile von offenen und geschlossenen Regelkreisen derart ausgenutzt werden, daß ein Mobilteil des zellularen Funksystems seine Sendeleistung in Abhängigkeit von der gemessenen Signalstärke eines zuvor empfangenen Sendesignals einer Basisstation des zellularen Funksystems regelt. Die Regelung besteht im wesentlichen darin, daß der jeweils gemessene Signalstärkewert mit einem vorgegebenen Referenzwert verglichen wird und in Abhängigkeit von dem Vergleichsergebnis das Sendesignal des Mobilteils beeinflußt wird. Die Sendeleistung des Mobilteils wird dabei vorzugsweise auf einen solchen Sendeleistungspegel geregelt, bei dem eine nahezu fehlerfreie Ausbreitung des Sendesignals zur Basisstation möglich ist.

Die der Erfindung zugrundeliegende Aufgabe besteht darin, in einer mobilen Funksende-/Funkempfangseinrichtung, insbesondere einem Mobilteil eines Schnurlostelefons den Stand der Technik dahingehend zu bereichern, daß sowohl die Leistungsaufnahme der mobilen Funksende-/Funkempfangseinrichtung verringert und somit die maximal mögliche Betriebszeitdauer der Einrichtung erhöht wird als auch der dafür erforderliche Regelungsaufwand vereinfacht und reduziert wird.

Diese Aufgabe wird durch die in dem Patentanspruch 1 angegebenen Merkmale gelöst.

Bei der erfindungsgemäßen mobilen Funksende-/Funkempfangseinrichtung, die beispielsweise als Mobilteil eines Schnurlostelefons oder als mobiler Handapparat eines Mobilfunktelefons ausgebildet sein kann, wird die einrichtungsspezifische Sendeleistung selbsttätig in Abhängigkeit von in der mobilen Funksende-/Funkempfangseinrichtung empfangenen und erfaßten Sonderinformationen, z.B. Feldstärkewerten und/oder Übertragungsfehlerwerten (Anspruch 5 und 6), geregelt. Für die Verwendung der mobilen Funksende-/Funkempfangseinrichtung als mobilen Handapparat eines Mobilfunksystems gemäß Anspruch 8 sind zusätzlich noch sendeleistungsbezogene Daten des Mobilfunk-Sendegerätes erforderlich, die vorzugsweise in den Sonderinformationen enthalten sind. Für die Sendeleistungsregelung weist die mobile Funksende-/Funkempfangseinrichtung einen folgegeregelten Regelkreis auf, bei dem der Wert der Regelgröße (hier: die einrichtungsspezifische Sendeleistung) dem sich ändernden Wert der Führungsgröße (hier: die empfangene und erfaßte Sonderinformation) folgt.

Vorteilhafte Weiterbildungen der Erfindung sind in den Unteransprüchen angegeben.

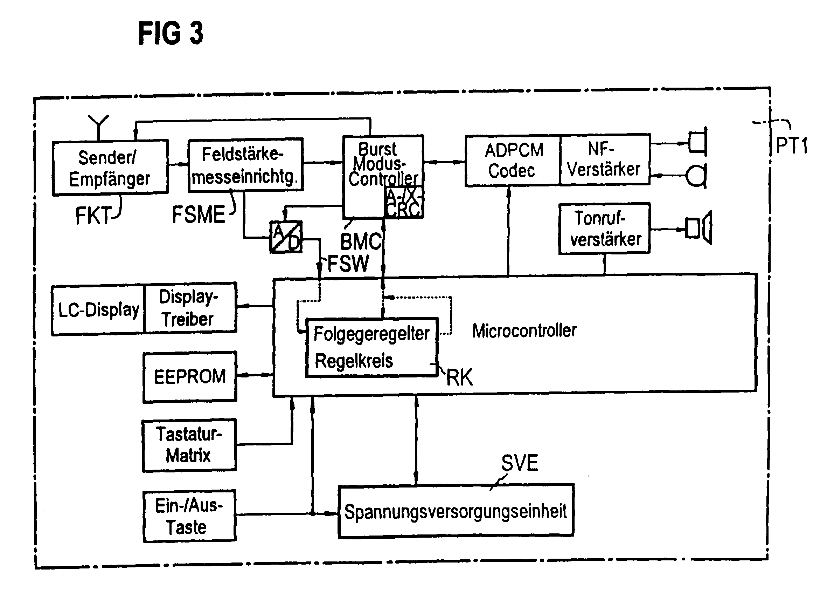

Ein Ausführungsbeispiel der Erfindung wird anhand der Figur 3 erläutert.

Figur 3 zeigt ausgehend von der Figur 1 das im Sinne der Erfindung modifizierte Schnurlos-Mobilteil PT1. Die Modifikation des Schnurlos-Mobilteils PT1 besteht darin, daß dem Mikrocontroller MIC des Mobilteils PT1 ein Regelkreis RK zugeordnet ist, der aus einzelnen dem Mikrocontroller MIC zugeordneten Programmodulen gebildet wird. Mit diesem Regelkreis RK werden die in dem Mikrocontroller MIC zur Verfügung stehenden Feldstärkewerte FSW und Übertragungsfehlerwerte A-CRC, X-CRC zur Regelung der Sendeleistung des Mobilteils PT1 benutzt und ausgewertet. Der Regelkreis ist dabei vorzugsweise als folgegeregelter Regelkreis ausgebildet, bei dem der Wert der Regelgröße (hier: die zu regelnde Sendeleistung) dem sich ändernden Wert der Führungsgröße (hier: die Feldstärkewerte FSW und Übertragungsfehlerwerte A-CRC, X-CRC) folgt (**vgl.** hierzu DIN 19226, Ausgabe Mai 1968, "Regelungstechnik und Steuerungstechnik - Begriffe und Benennungen", Kapitel 9 und 10, Seiten 17 bis 20).

Aus den erfaßten Feldstärkewerten FSW läßt sich eine Entfernung zur Schnurlos-Basisstation FT ableiten, während aus den Übertragungsfehlerwerte A-CRC, X-CRC sich ein Maß für die Qualität der empfangenen Funknachrichten ermitteln läßt. Nach dieser Auswertung wird vom Mikrocontroller MIC über I/O-Ports oder Register, die z. B. dem Burst Modus-Controller BMC zugeordnet sein können, das Herunter- bzw. Heraufregeln der Sendeleistung in dem Funkteil FKT veranlaßt. Die Regelung kann dabei sowohl kontinuierlich als auch in einigen wenigen großen Schritten (diskontinuierlich) erfolgen. Weiterhin ist es möglich die Regelung als Zweipunkt- oder Mehrpunktregelung auszuführen.

Der vorstehend beschriebene Regelkreis RK zur Regelung der Sendeleistung des Schnurlos-Mobilteils PT1 kann alternativ auch in mobilen Handapparaten von Mobilfunksystemen eingesetzt werden. Für die angesprochene Regelung ist es dann allerdings erforderlich, daß die Führungsgröße zusätzlich noch sendeleistungsbezogene Daten des Mobilfunk-Sendegerätes enthält. Dies ist deshalb notwendig, weil im Gegensatz zu Schnurlostelefonen bei Mobilfunktelefonen die jeweilige Sendeeinrichtung nicht mit einer konstanten Sendeleistung sendet.

## Patentansprüche

1. Mobile Funksende-/Funkempfangseinrichtung, insbesondere Mobilteil eines Schnurlos-Telekommunikationssystems, mit
a) ersten Mitteln (FKT, BMC, MIC) zum Empfangen von auf einer Funkstrecke zwischen einem Sendegerät (FT) und der mobilen Funksende-/Empfangseinrichtung übertragene Funknachrichten
b) zweiten Mitteln (FSME, BMC) zum Erfassen von in der Funknachricht enthaltenen Sonderinformationen (A-CRC, X-CRC, FSW),
c) dritten Mitteln (MIC, BMC, SVE) zum Einstellen einer einrichtungsspezifischen Sendeleistung,
d) die zweiten Mittel (FSME, BMC) erste Sonderinformationen (A-CRC, X-CRC, FSW) erfassen, die in der Funknachricht inhärent enthalten sind und Eigenschaften der Funknachrichten angeben,
e) vierte Mittel (RK, MIC) zum Regeln der einrichtungsspezifischen Sendeleistung in Abhängigkeit von der ersten Sonderinformation (A-CRC, X-CRC, FSW) vorgesehen sind,
f) die vierten Mittel (RK, MIC) als ein folgegeregelter Regelkreis (RK) ausgebildet sind,
wobei
g) der folgegeregelte Regelkreis (RK) die Sendeleistung in bezug auf einen oberen und unteren Grenzwert regelt.

2. Mobile Funksende-/Funkempfangseinrichtung nach Anspruch 1, wobei
der folgegeregelte Regelkreis (RK) als selbsttätiger Regelkreis ausgebildet ist.

3. Mobile Funksende-/Funkempfangseinrichtung nach Anspruch 1 oder 2, wobei
der folgegeregelte Regelkreis (RK) die Sendeleistung zeitkontinuierlich regelt.

4. Mobile Funksende-/Funkempfangseinrichtung nach Anspruch 1 oder 2, wobei
der folgegeregelte Regelkreis (RK) die Sendeleistung zeitdiskontinuierlich regelt.

5. Mobile Funksende-/Funkempfangseinrichtung nach einem der Ansprüche 1 bis 4, wobei
der in der Funknachricht inhärent enthaltenen Sonderinformation (A-CRC, X-CRC, FSW) meßbare Feldstärkewerte (FSW) zugeordnet sind.

6. Mobile Funksende-/Funkempfangseinrichtung nach einem der Ansprüche 1 bis 5, wobei
der in der Funknachricht inhärent enthaltenen Sonderinformation (A-CRC, X-CRC, FSW) Übertragungsfehlerwerte (A-CRC, X-CRC) zugeordnet sind.

7. Verwendung der mobilen Funksende-/Funkempfangseinrichtung nach einem der Ansprüche 1 bis 6 zusammen mit dem Sendegerät (FT) in einem Schnurlos-Telekommunikationssystem, bei dem die zwischen dem Sendegerät (FT) und der mobilen Funksende-/Funkempfangseinrichtung übertragene Funknachricht nach dem DECT-Standard zusammengesetzt ist.

8. Verwendung der mobilen Funksende-/Funkempfangseinrichtung nach einem der Ansprüche 1 bis 6 zusammen mit dem Sendegerät (FT) in einem Mobilfunk-Telekommunikationssystem, bei dem die zwischen dem Sendegerät und der mobilen Funksende-/Funkempfangseinrichtung übertragene Funknachricht nach dem GSM-Standard zusammengesetzt ist und bei dem der in der Funknachricht inhärent enthaltenen Sonderinformation (A-CRC, X-CRC, FSW) zusätzlich sendeleistungsbezogene Daten des Sendegerätes (FT) zugeordnet sind.

## Claims

1. Mobile radio transmitting/radio receiving device, in particular the mobile unit of a cordless telecommunication system, having
a) first means (FKT, BMC, MIC) for receiving radio messages transmitted on a radio link between a transmitter (FT) and the mobile radio transmitting/receiving device
b) second means (FSME, BMC) for acquiring special information (A-CRC, X-CRC, FSW) contained in the radio message,
c) third means (MIC, BMC, SVE) for setting a device-specific transmitting power,
d) the second means (FSME, BMC) acquiring first special information (A-CRC, X-CRC, FSW), which is inherently contained in the radio message and specifies characteristics of the radio messages,
e) fourth means (RK, MIC) being provided for controlling the device-specific transmitting power in dependence on the first special information (A-CRC, X-CRC, FSW),
f) the fourth means (RK, MIC) being designed as a sequential control circuit (RK),
g) the sequential control circuit (RK) regulating the transmitting power with respect to an upper and lower limit value.

2. Mobile radio transmitting/radio receiving device according to Claim 1, the sequential control circuit (RK) being designed as an automatic control circuit.

3. Mobile radio transmitting/radio receiving device according to Claim 1 or 2, the sequential control circuit (RK) regulating the transmitting power time-continuously.

4. Mobile radio transmitting/radio receiving device according to Claim 1 or 2, the sequential control circuit (RK) regulating the transmitting power time-discontinuously.

5. Mobile radio transmitting/radio receiving device according to one of Claims 1 to 4, measurable field intensity values (FSW) being assigned to the special information (A-CRC, X-CRC, FWS) inherently contained in the radio message.

6. Mobile radio transmitting/radio receiving device according to one of Claims 1 to 5, transmission error values (A-CRC, X-CRC) being assigned to the special information (A-CRC, X-CRC, FSW) inherently contained in the radio message.

7. Use of the mobile radio transmitting/radio receiving device according to one or more of Claims 1 to 6 together with the transmitter (FT) in a cordless telecommunication system, in which the radio message transmitted between the transmitter (FT) and the mobile radio transmitting/radio receiving device is composed in conformity with the DECT standard.

8. Use of the mobile radio transmitting/radio receiving device according to one of Claims 1 to 6 together with the transmitter (FT) in a mobile radio telecommunication system, in which the radio message transmitted between the transmitter and the mobile radio transmitting/radio receiving device is composed in conformity with the GSM standard and in which data relating to the transmitting power of the transmitter (FT) are additionally assigned to the special information (A-CRC, X-CRC, FSW) inherently contained in the radio message.

## Revendications

1. Dispositif mobile d'émission et de réception radio, notamment partie mobile d'un système de télécommunication sans fil, comportant
a) des premiers moyens (FKT, BMC, MIC) pour la réception d'informations radio transmises sur une voie radio entre un appareil d'émission (FT) et le dispositif mobile d'émission et de réception radio,
b) des deuxièmes moyens (FSME, BMC) pour la détection d'informations spéciales (A-CRC, X-CRC, FSW) contenues dans l'information radio,
c) des troisièmes moyens (MIC, BMC, SVE) pour le réglage d'une puissance d'émission spécifique au dispositif,
d) les deuxièmes moyens (FSME, BMC) détectant des premières informations spéciales (A-CRC, X-CRC, FSW) qui sont contenues de manière inhérente dans l'information radio et qui indiquent des propriétés des informations radio,
e) des quatrièmes moyens (RK, MIC) étant prévus pour la régulation de la puissance d'émission spécifique au dispositif en fonction des premières informations spéciales (A-CRC, X-CRC, FSW),
f) les quatrièmes moyens (RK, MIC) étant conçus comme un circuit de régulation (RK) régulé en cascade,
dans lequel
g) le circuit de régulation en cascade (RK) règle la puissance d'émission par rapport à une valeur limite supérieure et à une valeur limite inférieure.

2. Dispositif mobile d'émission et de réception radio selon la revendication 1, dans lequel le circuit de régulation en cascade (RK) est conçu comme un circuit de régulation automatique.

3. Dispositif mobile d'émission et de réception radio selon la revendication 1 ou 2, dans lequel le circuit de régulation en cascade (RK) règle la puissance d'émission de façon continue dans le temps.

4. Dispositif mobile d'émission et de réception radio selon la revendication 1 ou 2, dans lequel le circuit de régulation en cascade (RK) règle la puissance d'émission de façon discontinue dans le temps.

5. Dispositif mobile d'émission et de réception radio selon l'une des revendications 1 à 4, dans lequel des valeurs d'intensité de champ (FSW) mesurables sont associées à l'information spéciale (A-CRC, X-CRC, FSW) contenue de manière inhérente dans l'information radio.

6. Dispositif mobile d'émission et de réception radio selon l'une des revendications 1 à 5, dans lequel des valeurs d'erreur de transmission (A-CRC, X-CRC) sont associées à l'information spéciale (A-CRC, X-CRC, FSW) contenue de manière inhérente dans l'information radio.

7. Utilisation du dispositif mobile d'émission et de réception radio selon l'une des revendications 1 à 6, conjointement à l'appareil d'émission (FT), dans un système de télécommunication sans fil dans lequel l'information radio transmise entre l'appareil d'émission (FT) et le dispositif mobile d'émission et de réception radio est composée selon le standard DECT.

8. Utilisation du dispositif mobile d'émission et de réception radio selon l'une des revendications 1 à 6 conjointement à l'appareil d'émission (FT) dans un système de radiotélécommunication mobile dans lequel l'information radio transmise entre l'appareil d'émission et le dispositif mobile d'émission et de réception radio est composée selon le standard GSM et dans lequel des données, se rapportant à la puissance d'émission, de l'appareil d'émission (FT) sont associées en plus à l'information spéciale (A-CRC, X-CRC, FSW) contenue de manière inhérente dans l'information radio.
